# FASCICULE DE BREVET EUROPEEN

(11) **EP 3 791 235 B1**
(45) Date de publication et mention de la délivrance du brevet: **29.03.2023**
(21) Numéro de dépôt: 19765502.0
(22) Date de dépôt: 12.09.2019
(51) Int. Cl.: G05B 23/02, G01M 15/12, G01H 1/00, G01M 15/14

(54) **PROCEDE DE SURVEILLANCE DU FONCTIONNEMENT D'UNE MACHINE GENERANT DES VIBRATIONS ET DISPOSITIF POUR LA MISE EN ?UVRE D'UN TEL PROCEDE**
VERFAHREN ZUR ÜBERWACHUNG DES BETRIEBS EINER SCHWINGUNGEN ERZEUGENDEN MASCHINE UND VORRICHTUNG ZUR DURCHFÜHRUNG EINES SOLCHEN VERFAHRENS
METHOD FOR MONITORING THE OPERATION OF A MACHINE THAT GENERATES VIBRATIONS AND DEVICE FOR IMPLEMENTING SUCH A METHOD

(30) Priorité: 18.09.2018 FR 1858412
(43) Date de publication de la demande: 17.03.2021
(73) Titulaire: STMicroelectronics International N.V., 1228 Plan-les-Ouates, Geneva (CH)
(72) Inventeur: DE GRIMAUDET DE ROCHEBOUET, François, 83000 Toulon (FR)
(74) Mandataire: Casalonga, Axel
(86) Numéro de dépôt international: PCT/EP2019/074339
(87) Numéro de publication internationale: WO 2020/058075

(56) Documents cités:
- WO-A1-2015/086959
- WO-A1-2018/119489
- FR-A1- 3 032 273
- US-A1- 2014 324 739

## Description

### DOMAINE TECHNIQUE DE L'INVENTION

La présente invention concerne un procédé de surveillance du fonctionnement d'une machine générant des vibrations et un dispositif pour la mise en oeuvre d'un tel procédé.

### ARRIÈRE-PLAN TECHNOLOGIQUE DE L'INVENTION

Une machine telle qu'un moteur, une pompe, un compresseur, un ventilateur ou une turbine génère des vibrations lorsqu'elle est en fonctionnement. Le profil de ces vibrations, notamment en ce qui concerne l'amplitude et la fréquence, peut changer lorsque des pièces de la machine sont déséquilibrées, mal alignées, mal ajustées ou usées. Dans ce cas, si rien n'est fait, la machine risque d'être endommagée. C'est pourquoi il est important de surveiller la machine afin de déceler un éventuel changement dans le profil des vibrations. Des anomalies peuvent ainsi être identifiées avant qu'elles ne deviennent trop graves et n'entraînent des dégâts supplémentaires ou des interruptions imprévues.

La machine peut être surveillée au moyen d'un capteur de vibrations. Pour détecter des anomalies, les capteurs de vibration utilisés actuellement se basent sur des dépassements de seuil en amplitude et/ou des variations de fréquences dominantes. Toutefois, cette manière de procéder à l'inconvénient d'être limitée. En effet, cette approche ne permet notamment pas de détecter des variations survenant à des fréquences non prévues lors de la configuration initiale du capteur, mais seulement celles survenant à certaines fréquences prédéterminées. Par conséquent, il peut arriver que certaines anomalies ne soient pas détectées.

Les documents US 2014/324739 A1 et WO 2015/086959 A1 présentent des exemples de procédé de surveillance du fonctionnement d'une machine comprenant une phase d'apprentissage consistant à constituer un savoir par enregistrement de signatures vibratoires de référence représentatives du fonctionnement normal de la machine et une phase de surveillance consistant à comparer les signatures vibratoires issus des signaux vibratoires de la machine audit savoir afin d'identifier une anomalie dans le fonctionnement de la machine.

### RÉSUMÉ DE L'INVENTION

Il ressort de ce qui précède qu'il existe un besoin d'améliorer la détection et l'analyse de vibrations d'une machine.

La présente invention vise à répondre à ce besoin en proposant, selon un premier aspect de l'invention, un procédé de surveillance du fonctionnement d'une machine générant des vibrations, le procédé comportant :
- une phase d'apprentissage comprenant les étapes suivantes :
   ∘ acquérir dans le domaine temporel un premier signal vibratoire généré par la machine ;
   ∘ déterminer une première signature vibratoire correspondant au premier signal vibratoire ;
   ∘ déterminer un premier taux de similarité entre la première signature vibratoire et un savoir dans lequel des signatures vibratoires sont enregistrées ;
   ∘ comparer le premier taux de similarité avec un premier seuil prédéterminé ;
   ∘ si le premier taux de similarité est inférieur au premier seuil, enregistrer la signature vibratoire dans le savoir ;
   les étapes de la phase d'apprentissage étant répétées périodiquement de manière à constituer le savoir ;
- une phase de surveillance comprenant les étapes suivantes :
   ∘ acquérir dans le domaine temporel un deuxième signal vibratoire généré par la machine ;
   ∘ déterminer une deuxième signature vibratoire correspondante au deuxième signal vibratoire ;
   ∘ déterminer un deuxième taux de similarité entre la deuxième signature vibratoire et le savoir ;
   ∘ comparer le deuxième taux de similarité avec un deuxième seuil prédéterminé ;
   ∘ si le deuxième taux de similarité est inférieur au deuxième seuil, générer une alerte, la deuxième signature vibratoire étant considérée comme révélatrice d'une anomalie ;
   les étapes de la phase de surveillance étant répétées périodiquement ;
le procédé de surveillance passant de manière autonome de la phase d'apprentissage à la phase de surveillance lorsque le savoir est considéré comme étant constitué.

Dans un premier temps, le procédé de surveillance apprend à reconnaître de manière autonome les vibrations caractéristiques d'un fonctionnement normal de la machine. Ensuite, dans un deuxième temps le procédé de surveillance acquiert et compare régulièrement des vibrations afin de déterminer si la machine s'écarte de son fonctionnement normal. Grâce à l'invention, il est donc possible de détecter efficacement si une anomalie se produit et dans ce cas, de déclencher une alerte.

De plus, durant sa phase d'apprentissage, le procédé de surveillance enregistre uniquement les signatures vibratoires suffisamment différentes des signatures déjà apprises, c'est-à-dire des signatures déjà enregistrées dans le savoir, ce qui permet d'éviter la redondance d'informations et de limiter le nombre de données stockées durant l'apprentissage sans diminuer la qualité de l'apprentissage. Le procédé de surveillance peut alors être implémenté sur des dispositifs contraints en termes de ressources, comme par exemple un microcontrôleur.

Selon un mode de mise en oeuvre, la phase d'apprentissage comporte en outre une étape spécifique de comparaison du premier taux de similarité d'un nombre M prédéterminé de signatures vibratoires déterminées consécutivement avec un seuil spécifique prédéterminé supérieur au premier seuil, le savoir étant considéré comme étant constitué si le premier taux de similarité des M dernières signatures vibratoires est supérieur au seuil spécifique.

Selon un mode de mise en oeuvre, la phase de surveillance comporte une période dite « de découverte » au cours de laquelle la deuxième signature vibratoire considérée comme révélatrice d'une anomalie est enregistrée dans le savoir.

Selon un mode de mise en oeuvre, la phase de surveillance comporte une étape de comparaison de la durée de l'anomalie avec une durée prédéterminée, l'anomalie étant avéré si la durée de l'anomalie est supérieure à la durée prédéterminée.

Selon un mode de mise en oeuvre, la phase de surveillance comporte en outre une étape de transmission de l'alerte.

Selon un mode de mise en oeuvre, la phase de surveillance comporte en outre une étape de transmission d'un rapport d'analyse effectuée périodiquement.

Selon un mode de mise en oeuvre, les étapes de la phase d'apprentissage sont répétées périodiquement selon une première période de répétition, les étapes de la phase de surveillance étant répétées périodiquement selon une deuxième période de répétition supérieure à la première période de répétition.

Selon un mode de mise en oeuvre, les signaux vibratoires sont acquis au moyen d'un capteur de vibrations, le procédé comportant en outre une étape initiale de calibration du capteur de vibrations.

Selon un mode de mise en oeuvre, le deuxième seuil de la deuxième étape de comparaison est inférieur au premier seuil de la première étape de comparaison.

Un deuxième aspect de l'invention concerne un dispositif de surveillance adapté et configuré pour la mise en oeuvre d'un procédé de surveillance selon le premier aspect de l'invention, le dispositif de surveillance étant destiné à être installé sur une machine générant des vibrations, le dispositif comportant :
- un capteur de vibration adapté et configuré pour acquérir un signal vibratoire ;
- un module de contrôle adapté et configuré pour déterminer une signature vibratoire correspondant au signal vibratoire, déterminer un taux de similarité entre la signature vibratoire et un savoir dans lequel des signatures vibratoires sont enregistrées, et comparer le taux de similarité avec un seuil prédéterminé ;
- une mémoire adaptée et configurée pour enregistrer la signature vibratoire.

### BRÈVE DESCRIPTION DES FIGURES

L'invention et ses différentes applications seront mieux comprises à la lecture de la description qui suit et à l'examen des figures qui l'accompagnent, parmi lesquelles :
- la figure 1 est un diagramme fonctionnel d'un dispositif de surveillance du fonctionnement d'une machine générant des vibrations, selon un mode de réalisation de l'invention ;
- la figure 2 est un logigramme d'un procédé de surveillance du fonctionnement d'une machine générant des vibrations, selon un mode de mise en oeuvre de l'invention ;
- la figure 3 est un logigramme d'une étape de calibration du procédé de surveillance de la figure 2.

Les figures ne sont présentées qu'à titre indicatif et nullement limitatif de l'invention.

Pour plus de clarté, les éléments identiques ou similaires sont repérés par des signes de référence identiques sur toutes les figures.

### DESCRIPTION DÉTAILLÉE D'AU MOINS UN MODE DE RÉALISATION

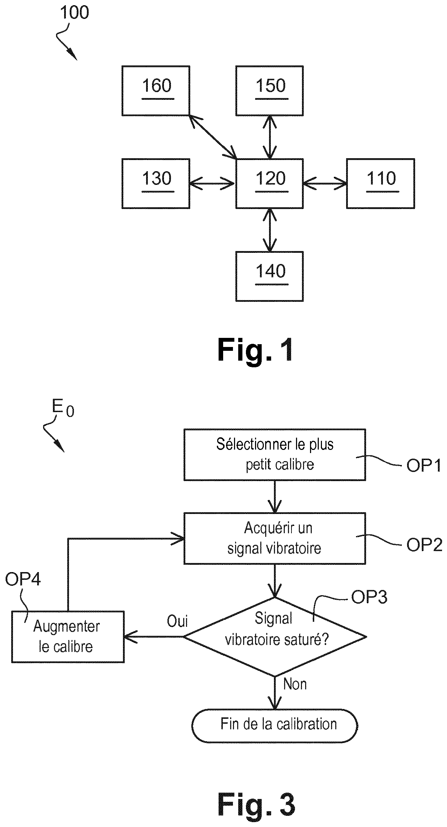

La figure 1 représente un mode de réalisation d'un dispositif de surveillance 100 selon l'invention. Le dispositif de surveillance 100 est destiné à être installé sur une machine qui génère des vibrations mécaniques lorsqu'elle est en fonctionnement. La machine peut par exemple être un moteur, une pompe, un compresseur, un ventilateur ou une turbine. Le dispositif de surveillance 100 comporte un capteur de vibrations 110, un module de contrôle 120, une mémoire 130, module de transmission de données 140, une alimentation électrique 150 et un organe d'activation 160.

Le capteur de vibrations 110 est adapté et configuré pour acquérir un signal vibratoire généré par la machine. Le capteur de vibrations 110 est par exemple un accéléromètre à 3 axes. Un tel accéléromètre peut acquérir un signal vibratoire comprenant trois composantes correspondant chacune à un axe de l'accéléromètre. Autrement dit, le signal vibratoire peut être représenté dans un repère orthonormé à trois dimensions formé par les trois axes de l'accéléromètre. Avantageusement, les trois composantes du signal vibratoire sont additionnées puis normalisées afin de faciliter l'utilisation du dispositif de surveillance 100. En effet, en procédant ainsi, le dispositif de surveillance 100 peut être installé sur la machine dans n'importe quel sens.

Le signal vibratoire obtenu par le capteur de vibrations 110 est transmis au module de contrôle 120 dont le rôle est d'analyser le signal vibratoire reçu. Le module de contrôle 120 est notamment configuré pour déterminer une signature vibratoire à partir du signal vibratoire acquis par le capteur de vibrations 110, comme décrit plus en détail par la suite. Le module de contrôle 120 comporte par exemple un microprocesseur.

La mémoire 130 est adaptée et configurée pour enregistrer des signatures vibratoires caractéristiques d'un fonctionnement normal de la machine. L'ensemble des signatures vibratoires stockées dans la mémoire forment un savoir.

Le module de transmission de données 140 est adapté et configuré pour transmettre des rapports d'analyse de manière périodique, ainsi que des alertes lorsque des anomalies sont détectées. Ces données sont par exemple transmises à une console de supervision qui permet de visualiser les rapports d'analyse et de gérer les alertes. De préférence, le module de transmission utilise un réseau de communication sans fil de type internet des objets, également appelé IOT pour « Internet Of Things » selon la terminologie anglo-saxonne. Le réseau IOT peut par exemple utiliser la technologie LoRa ou la technologie Sigfox.

L'alimentation électrique 150 fournit l'énergie électrique nécessaire au fonctionnement du dispositif de surveillance 100. L'alimentation électrique 150 est avantageusement dimensionnée de manière à ce que le dispositif de surveillance fonctionne sans interruption pendant une période de temps prolongée, de l'ordre de plusieurs années. Afin de réduire la consommation d'énergie électrique, le dispositif de surveillance 100 est avantageusement configuré pour se mettre en veille entre chaque acquisition. L'alimentation électrique 150 comporte par exemple une batterie ou une pile.

L'organe d'activation 160 peut être utilisé pour mettre en fonctionnement ou arrêter le dispositif de surveillance 100. Avantageusement, le dispositif de surveillance 100 comporte un unique organe d'activation 160, ce qui facilite l'utilisation du dispositif de surveillance 100. Une fois que l'organe d'activation 160 est déclenché, le dispositif de surveillance 100 fonctionne de manière complétement autonome. L'organe d'activation 160 est par exemple un bouton poussoir ou un interrupteur.

Le dispositif de surveillance 100 comporte également des moyens de fixation (non représentés) configurés pour maintenir le dispositif de surveillance 100 sur la machine. Les moyens de fixation peuvent être des éléments magnétiques ou des éléments adhésifs.

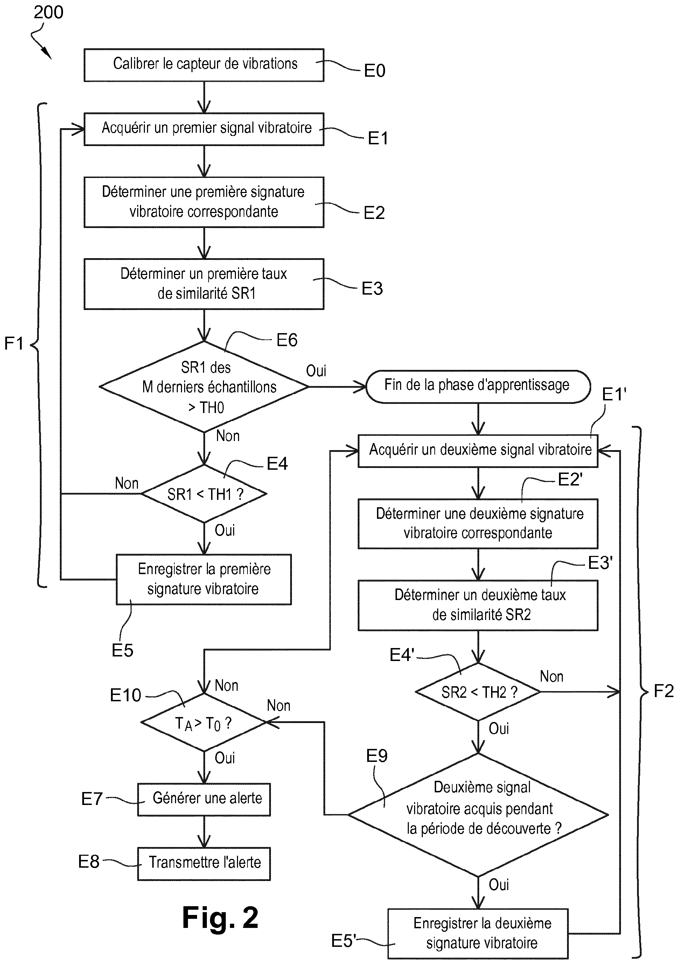

La figure 2 montre un mode de mise en oeuvre préférentiel d'un procédé de surveillance 200 selon l'invention. Le procédé de surveillance 200 peut être mis en oeuvre par le dispositif de surveillance 100 de la figure 1. Le procédé de surveillance 200 comporte une phase d'apprentissage F1 ayant pour but de constituer le savoir et une phase de surveillance F2 au cours de laquelle les vibrations de la machine sont comparées au savoir afin de détecter des différences pouvant être révélatrice d'une anomalie dans la machine. L'anomalie peut par exemple correspondre à des pièces de la machine déséquilibrées, mal alignées, mal ajustées ou usées. Le procédé de surveillance 200 peut ainsi être utilisé pour faire de la maintenance prédictive.

La phase d'apprentissage F1 comporte une première étape E1 d'acquisition dans le domaine temporel d'un premier signal vibratoire généré par la machine. Le signal vibratoire est un échantillon des vibrations de la machine correspondant à une première durée d'acquisition de préférence comprise entre 1 seconde et 5 secondes. La première durée d'acquisition est par exemple égale à 2 secondes. La première étape d'acquisition E1 est effectuée à une fréquence d'échantillonnage qui est avantageusement paramétrée de manière à être supérieure au double de la fréquence de travail maximale du capteur de vibrations. À titre d'exemple non limitatif, l'accéléromètre utilisé dans le dispositif de surveillance 100 de la figure 1 est apte à mesurer des vibrations à des fréquences comprises entre 0 Hz et 200 Hz.

La première étape d'acquisition E1 est suivie d'une première étape E2 de détermination d'une signature vibratoire correspondant au signal vibratoire acquis. La signature vibratoire est par exemple déterminée de la manière suivante. Le signal vibratoire dans le domaine temporel peut être transformé en un signal vibratoire dans le domaine fréquentiel, en effectuant par exemple une transformée de Fourier. Le signal vibratoire dans le domaine fréquentiel s'étend sur une plage de fréquence qui dépend de la fréquence d'échantillonnage. Cette plage de fréquence est divisée en un nombre prédéterminé d'intervalles, par exemple égal à 128 ou à 256. Un coefficient est attribué à chaque intervalle de fréquence, chaque coefficient représentant l'intensité du signal vibratoire dans l'intervalle de fréquence correspondant. La signature vibratoire comporte donc une série de valeurs qui caractérisent le signal vibratoire prélevé sur la machine.

On procède ensuite à une première étape E3 de détermination d'un premier taux de similarité SR1 entre la signature vibratoire qui vient d'être déterminée et les signatures vibratoires présentes dans le savoir. Les méthodes de calcul du taux de similarité sont connues de l'homme du métier et ne seront donc pas décrites plus en détail. De telles méthodes sont notamment utilisées dans le domaine de la reconnaissance d'empreintes digitales. À titre d'exemple non limitatif, le taux de similarité peut être déterminé par un calcul de distance dans un espace à N dimension où N est ici égal au nombre de coefficients que comporte la signature vibratoire. Le taux de similarité peut être exprimé en pourcentage.

Le premier taux de similarité SR1 est ensuite comparé, au cours d'une première étape de comparaison E4, à un premier seuil TH1 prédéterminé. Si le premier taux de similarité SR1 est inférieur au premier seuil TH1, la première signature vibratoire est considérée comme n'étant pas connue. Dans ce cas, la première signature vibratoire est enregistrée dans le savoir au cours d'une première étape d'enregistrement E5. Par contre, si le premier taux de similarité SR1 est supérieur au premier seuil TH1, la première signature vibratoire est considérée comme étant connue. Dans ce cas, la première signature vibratoire n'est pas enregistrée dans le savoir. Le premier seuil TH1 est par exemple fixé à 90 %.

Les étapes de la phase d'apprentissage F1 sont répétées périodiquement selon une première période de répétition. Le savoir, qui est initialement vide, est ainsi constitué au fur et à mesure. La première période de répétition est par exemple égale à une minute. Autrement dit, un nouveau signal vibratoire est échantillonné toutes les minutes. De préférence, la première période de répétition est régulière.

Avantageusement, la phase d'apprentissage F1 comporte également une étape spécifique de comparaison E6 du premier taux de similarité d'un nombre M prédéterminé de signatures vibratoires déterminées consécutivement avec un seuil spécifique TH0 prédéterminé supérieur au premier seuil TH1. L'étape spécifique de comparaison E6 est par exemple effectuée avant la première étape de comparaison E4 du taux de similarité avec le premier seuil TH1. Si le premier taux de similarité SR1 des M dernières signatures vibratoires est supérieur au deuxième seuil TH0, le savoir est considéré comme étant constitué. Dans ce cas, la phase d'apprentissage F1 prend fin et le procédé de surveillance 200 passe à la phase de surveillance F2. Si ce n'est pas le cas, c'est-à-dire si le taux de similarité d'au moins l'une des M dernières signatures vibratoires est inférieur au deuxième seuil TH0, la phase d'apprentissage F1 se poursuit. À titre d'exemple non limitatif, la phase d'apprentissage F1 peut se terminer lorsque le taux de similarité des dix dernières signatures vibratoires, qui correspondent donc aux dix derniers signaux vibratoires acquis, est supérieur à 98 %. La durée de la phase d'apprentissage F1 dépend de la machine sur laquelle le dispositif de surveillance 100 est installé mais dans tous les cas, la phase d'apprentissage F1 s'achève de manière autonome.

Selon un autre mode de mise en oeuvre, le savoir peut être considéré comme étant constitué à la fin d'une durée d'apprentissage prédéterminée. La durée d'apprentissage peut dans ce cas être paramétrée en fonction du type de machine sur laquelle le dispositif de surveillance 100 est destiné à être installé.

Avantageusement, la phase d'apprentissage F1 est précédée d'une étape initiale E0 de calibration du capteur de vibrations. En effet, le capteur de vibrations peut comporter plusieurs calibres de fonctionnement. À titre d'exemple non limitatif, l'accéléromètre utilisé dans le dispositif de surveillance 100 de la figure 1 comporte quatre calibres de fonctionnement qui s'étendent de 0 G à respectivement 2, 4, 8 ou 16 G. Le but de l'étape de calibration E0 est de déterminer quel calibre utiliser de manière à obtenir les données les plus pertinentes.

La figure 3 montre un logigramme de l'étape de calibration E0 du procédé de surveillance 200 de la figure 2. L'étape de calibration E0 débute par une première opération OP1 de sélection du plus petit calibre du capteur de vibrations. Un signal vibratoire est ensuite prélevé sur la machine au cours d'une deuxième opération OP2. Au cours d'une troisième opération OP3, on vérifie si le signal vibratoire est saturé. Si tel est le cas, le calibre du capteur de vibrations est augmenté au cours d'une quatrième opération OP4. Sinon, le calibre sélectionné est approprié et l'étape de calibration E0 prend fin. De préférence, la deuxième opération OP2 d'acquisition du signal vibratoire est effectuée sur une durée relativement longue, par exemple sur une durée d'une minute, de manière à obtenir un échantillon de vibrations suffisamment représentatif.

La phase d'apprentissage F1 est suivie de la phase de surveillance F2 qui comprend une deuxième étape E1' d'acquisition d'un deuxième signal vibratoire, une deuxième étape E2' de détermination d'une deuxième signature vibratoire correspondant au deuxième signal vibratoire et une deuxième étape E3' de détermination d'un deuxième taux de similarité de la deuxième signature vibratoire. Ces deuxièmes étapes E1', E2', E3' effectuées pendant la phase de surveillance F2 sont similaires aux première étapes E1, E2, E3 de même nom effectuées pendant la phase d'apprentissage F1. La durée de la deuxième étape d'acquisition E1' est de préférence identique à la durée de la première étape d'acquisition E1. Alternativement, la durée des étapes d'acquisition E1, E1' peuvent être différentes.

Pendant la phase de surveillance F2, le deuxième taux de similarité SR2 est comparé, au cours d'une deuxième étape de comparaison E4', à un deuxième seuil TH2 prédéterminé inférieur au premier seuil TH1. Si le deuxième taux de similarité SR2 est supérieur au deuxième seuil TH2, on considère que la deuxième signature vibratoire est connue. Si le deuxième taux de similarité SR' est inférieur au deuxième seuil TH2, on considère que la deuxième signature vibratoire n'est pas connue et est révélatrice d'une anomalie au niveau de la machine. Le deuxième seuil TH2 est par exemple fixé à 80 %.

La phase de surveillance F2 comporte une étape E7 de génération d'une alerte lorsqu'une anomalie est reconnue. L'alerte peut ensuite être transmise au cours d'une étape E8 de transmission. Un opérateur peut ainsi est être averti qu'une anomalie au niveau de la machine a été détectée.

Outre l'envoi d'une alerte, la phase de surveillance F2 peut également comporter une étape de transmission (non représentée) d'un rapport d'analyse des vibrations de la machine. Le rapport d'analyse comporte par exemple des informations relatives à la distribution en fréquence et à l'amplitude des vibrations et en particulier des éventuelles anomalies. Le rapport d'analyse peut également indiquer les temps de fonctionnement et d'arrêt de la machine. La transmission du rapport d'analyse est effectuée régulièrement, par exemple toutes les deux heures.

Dans ce mode de réalisation préférentiel, la phase de surveillance F2 comporte une période dite « de découverte » qui débute en même temps que la phase de surveillance F2. Avantageusement, la phase de surveillance F2 comporte une étape de vérification E9 effectuée avant de générer l'alerte et au cours de laquelle on vérifie si le deuxième signal vibratoire, correspondant à la deuxième signature vibratoire révélatrice d'une anomalie, a été acquis pendant la période de découverte. Si ce n'est pas le cas, l'alerte peut être générée. Si le deuxième signal vibratoire a bien été acquis pendant la période de découverte, la deuxième signature vibratoire est enregistrée dans le savoir au cours d'une étape d'enregistrement E5' et l'alerte n'est pas générée. Autrement dit, on considère qu'il ne s'agit pas vraiment d'une anomalie mais de vibrations caractéristiques du fonctionnement normal de la machine qui ne sont pas présentées pendant la phase d'apprentissage F1. Ainsi, au cours de la période de découverte, le savoir peut être enrichi. La période de découverte est particulièrement utile pour des machines ayant des cycles de fonctionnement qui sont variables dans le temps. C'est le cas par exemple des compresseurs d'air qui ont des changements vibratoires en début et en fin de cycle. De préférence, la période de découverte présente une durée prédéterminée par exemple égale à sept jours.

Avantageusement, la phase de surveillance F2 comporte une étape E10 de comparaison de la durée de l'anomalie T_{A} avec une durée prédéterminée T₀. Si la durée de l'anomalie T_{A} est supérieure à la durée prédéterminée T₀, l'alerte est générée. Dans ce cas, on considère en effet que l'anomalie est avérée. Si la durée de l'anomalie T_{A} est inférieure à la durée prédéterminée T₀, l'alerte n'est pas générée. Cette étape E9 de comparaison permet d'éviter de déclencher des alertes de manière intempestive, par exemple lorsque la machine subit un événement ponctuel, tel qu'un choc, qui entraînerait une modification des vibrations.

Les étapes de la phase de surveillance F2 sont répétées périodiquement selon une deuxième période de répétition. Avantageusement, la deuxième période de répétition est supérieure à la première période de répétition afin de minimiser la consommation d'énergie électrique et donc de prolonger la durée de fonctionnement du dispositif de surveillance 100. La deuxième période de répétition est par exemple égale à deux minutes. La deuxième période de répétition peut être dynamique, c'est-à-dire qu'elle peut varier, et en particulier diminuer, lorsqu'une anomalie est détectée. Un avantage est de permettre une caractérisation plus précise de l'anomalie, notamment en ce qui concerne sa durée.

Naturellement, l'invention n'est pas limitée aux modes de réalisation décrits en référence aux figures et des variantes pourraient être envisagées sans sortir du cadre de l'invention telle que formulée dans les présentes revendications.

## Revendications

1. Procédé de surveillance (200) du fonctionnement d'une machine générant des vibrations, comportant :
- une phase d'apprentissage (F1) du fonctionnement normal de la machine comprenant les étapes suivantes :
∘ (E1) acquérir dans le domaine temporel un premier signal vibratoire généré par la machine ;
∘ (E2) déterminer une première signature vibratoire correspondant au premier signal vibratoire ;
∘ (E3) déterminer un premier taux de similarité (SR1) entre la première signature vibratoire et chacune des signatures vibratoires enregistrées dans un savoir ;
∘ (E4) comparer le premier taux de similarité (SR1) avec un premier seuil (TH1) prédéterminé ;
∘ (E5) si le premier taux de similarité (SR1) est inférieur au premier seuil (TH1), enregistrer la signature vibratoire dans le savoir ;
les étapes (E1 à E5) de la phase d'apprentissage étant répétées périodiquement de manière à constituer le savoir ;
- une phase de surveillance (F2) comprenant les étapes suivantes :
∘ (E1') acquérir dans le domaine temporel un deuxième signal vibratoire généré par la machine ;
∘ (E2') déterminer une deuxième signature vibratoire correspondante au deuxième signal vibratoire ;
∘ (E3') déterminer un deuxième taux de similarité (SR2) entre la deuxième signature vibratoire et chacune des signatures vibratoires enregistrées dans le savoir ;
∘ (E4') comparer le deuxième taux de similarité (SR2) avec un deuxième seuil (TH2) prédéterminé ;
∘ (E7) si le deuxième taux de similarité (SR2) est inférieur au deuxième seuil (TH2, générer une alerte, la deuxième signature vibratoire étant considérée comme révélatrice d'une anomalie ;
les étapes (E1' à E7) de la phase de surveillance étant répétées périodiquement ;
le procédé de surveillance (200) passant de manière autonome de la phase d'apprentissage (F1) à la phase de surveillance (F2) lorsque le savoir est considéré comme étant constitué.

2. Procédé (200) selon la revendication 1, **caractérisé en ce que** la phase d'apprentissage (F1) comporte en outre une étape spécifique (E6) de comparaison du premier taux de similarité (SR1) d'un nombre M prédéterminé de signatures vibratoires déterminées consécutivement avec un seuil spécifique (TH0) prédéterminé supérieur au premier seuil (TH1), le savoir étant considéré comme étant constitué si le premier taux de similarité (SR1) des M dernières signatures vibratoires est supérieur au seuil spécifique (TH0).

3. Procédé (200) selon l'une quelconque des revendications 1 et 2, **caractérisé en ce que** la phase de surveillance (F2) comporte une période dite « de découverte » au cours de laquelle la deuxième signature vibratoire considérée comme révélatrice d'une anomalie est enregistrée dans le savoir.

4. Procédé (200) selon l'une quelconque des revendications 1 à 3, **caractérisé en ce que** la phase de surveillance (F2) comporte une étape (E10) de comparaison de la durée de l'anomalie avec une durée prédéterminée, l'anomalie étant avéré si la durée de l'anomalie est supérieure à la durée prédéterminée.

5. Procédé (200) selon l'une quelconque des revendications 1 à 4, **caractérisé en ce que** la phase de surveillance (F2) comporte en outre une étape (E8) de transmission de l'alerte.

6. Procédé (200) selon l'une quelconque des revendications 1 à 5, **caractérisé en ce que** la phase de surveillance (F2) comporte en outre une étape de transmission d'un rapport d'analyse effectuée périodiquement.

7. Procédé (200) selon l'une quelconque des revendications 1 à 6, **caractérisé en ce que** les étapes (E1 à E5) de la phase d'apprentissage (F1) sont répétées périodiquement selon une première période de répétition, les étapes (E1' à E7) de la phase de surveillance (F2) étant répétées périodiquement selon une deuxième période de répétition supérieure à la première période de répétition.

8. Procédé (200) selon l'une quelconque des revendications 1 à 7, **caractérisé en ce que** les signaux vibratoires sont acquis au moyen d'un capteur de vibrations, le procédé (200) comportant en outre une étape initiale (E0) de calibration du capteur de vibrations.

9. Procédé (200) selon l'une quelconque des revendications 1 à 8, **caractérisé en ce que** le deuxième seuil (TH2) de la deuxième étape (E4') de comparaison est inférieur au premier seuil (TH1) de la première étape (E4) de comparaison.

10. Dispositif de surveillance (100) adapté et configuré pour la mise en oeuvre d'un procédé (200) selon l'une quelconque des revendications 1 à 9, le dispositif de surveillance (100) étant destiné à être installé sur une machine générant des vibrations, le dispositif comportant :
- un capteur de vibration (110) adapté et configuré pour acquérir (E1, E1') un signal vibratoire ;
- un module de contrôle (120) adapté et configuré pour déterminer (E2, E2') une signature vibratoire correspondant au signal vibratoire, déterminer (E3, E3') un taux de similarité entre la signature vibratoire et un savoir dans lequel des signatures vibratoires sont enregistrées, et comparer (E4, E4') le taux de similarité avec un seuil prédéterminé (TH1, TH2) ;
- une mémoire (130) adaptée et configurée pour enregistrer la signature vibratoire.

## Patentansprüche

1. Verfahren zur Überwachung (200) des Betriebs einer Schwingungen erzeugenden Maschine, umfassend:
- eine Phase des Lernens (F1) des Normalbetriebs der Maschine, die die folgenden Schritte umfasst:
-- (E1) Erfassen eines ersten von der Maschine erzeugten Schwingungssignals im Zeitbereich;
-- (E2) Bestimmen einer ersten Schwingungssignatur, die dem ersten Schwingungssignal entspricht;
-- (E3) Bestimmen eines ersten Ähnlichkeitsgrades (SR1) zwischen der ersten Schwingungssignatur und jeder der Schwingungssignaturen, die in einem Wissen gespeichert sind;
-- (E4) Vergleichen des ersten Ähnlichkeitsgrades (SR1) mit einer ersten vorbestimmten Schwelle (TH1);
-- (E5) Speichern der Schwingungssignatur in dem Wissen, wenn der erste Ähnlichkeitsgrad (SR1) kleiner ist als die erste Schwelle (TH1);
wobei die Schritte (E1 bis E5) der Lernphase periodisch wiederholt werden, um das Wissen aufzubauen;
- eine Phase des Überwachens (F2), die die folgenden Schritte umfasst:
-- (E1') Erfassen eines zweiten von der Maschine erzeugten Schwingungssignals im Zeitbereich;
-- (E2') Bestimmen einer zweiten Schwingungssignatur, die dem zweiten Schwingungssignal entspricht;
-- (E3') Bestimmen eines zweiten Ähnlichkeitsgrades (SR2) zwischen der zweiten Schwingungssignatur und jeder der Schwingungssignaturen, die im Wissen gespeichert sind;
-- (E4') Vergleichen des zweiten Ähnlichkeitsgrades (SR2) mit einer zweiten vorbestimmten Schwelle (TH2);
-- (E7) Erzeugen eines Alarms, wenn der zweite Ähnlichkeitsgrad (SR2) kleiner ist als die zweite Schwelle (TH2), wobei die zweite Schwingungssignatur als eine Anomalie offenbarend erachtet wird;
wobei die Schritte (E1' bis E7) der Überwachungsphase periodisch wiederholt werden;
wobei das Überwachungsverfahren (200) eigenständig von der Lernphase (F1) zur Überwachungsphase (F2) übergeht, wenn das Wissen als aufgebaut erachtet wird.

2. Verfahren (200) nach Anspruch 1, **dadurch gekennzeichnet, dass** die Lernphase (F1) weiter einen spezifischen Schritt (E6) des Vergleichens des ersten Ähnlichkeitsgrades (SR1) einer vorbestimmten Anzahl M von aufeinanderfolgend bestimmten Schwingungssignaturen mit einer vorbestimmten spezifischen Schwelle (TH0) umfasst, die größer ist als die erste Schwelle (TH1), wobei das Wissen als aufgebaut erachtet wird, wenn der erste Ähnlichkeitsgrad (SR1) der M letzten Schwingungssignaturen größer ist als die spezifische Schwelle (TH0).

3. Verfahren (200) nach einem der Ansprüche 1 und 2, **dadurch gekennzeichnet, dass** die Überwachungsphase (F2) eine sogenannte "Entdeckungs"-Periode umfasst, in deren Verlauf die zweite Schwingungssignatur, die als eine Anomalie anzeigend erachtet wird, im Wissen gespeichert wird.

4. Verfahren (200) nach einem der Ansprüche 1 bis 3, **dadurch gekennzeichnet, dass** die Überwachungsphase (F2) einen Schritt (E10) des Vergleichens der Dauer der Anomalie mit einer vorbestimmten Dauer umfasst, wobei die Anomalie erwiesen ist, wenn die Dauer der Anomalie größer ist als die vorbestimmte Dauer.

5. Verfahren (200) nach einem der Ansprüche 1 bis 4, **dadurch gekennzeichnet, dass** die Überwachungsphase (F2) weiter einen Schritt (E8) des Übertragens des Alarms umfasst.

6. Verfahren (200) nach einem der Ansprüche 1 bis 5, **dadurch gekennzeichnet, dass** die Überwachungsphase (F2) weiter einen Schritt des Übertragens eines Analyseberichts umfasst, der periodisch ausgeführt wird.

7. Verfahren (200) nach einem der Ansprüche 1 bis 6, **dadurch gekennzeichnet, dass** die Schritte (E1 bis E5) der Lernphase (F1) periodisch nach einer ersten Wiederholungsperiode wiederholt werden, wobei die Schritte (E1' bis E7) der Überwachungsphase (F2) periodisch nach einer zweiten Wiederholungsperiode wiederholt werden, die größer ist als die erste Wiederholungsperiode.

8. Verfahren (200) nach einem der Ansprüche 1 bis 7, **dadurch gekennzeichnet, dass** die Schwingungssignale mittels eines Schwingungssensors erfasst werden, wobei das Verfahren (200) weiter einen Anfangsschritt (E0) des Kalibrierens des Schwingungssensors umfasst.

9. Verfahren (200) nach einem der Ansprüche 1 bis 8, **dadurch gekennzeichnet, dass** die zweite Schwelle (TH2) des zweiten Vergleichsschrittes (E4') kleiner ist als die erste Schwelle (TH1) des ersten Vergleichsschrittes (E4).

10. Überwachungsvorrichtung (100), die für die Umsetzung eines Verfahrens (200) nach einem der Ansprüche 1 bis 9 geeignet und ausgelegt ist, wobei die Überwachungsvorrichtung (100) dazu bestimmt ist, an einer Schwingungen erzeugenden Maschine installiert zu werden, wobei die Vorrichtung umfasst:
- einen Schwingungssensor (110), der dafür geeignet und ausgelegt ist, ein Schwingungssignal zu erfassen (E1, E1');
- ein Steuermodul (120), das dafür geeignet und ausgelegt ist, eine Schwingungssignatur, die dem Schwingungssignal entspricht, zu bestimmen (E2, E2'), einen Ähnlichkeitsgrad zwischen der Schwingungssignatur und einem Wissen, in dem Schwingungssignaturen gespeichert sind, zu bestimmen (E3, E3'), und den Ähnlichkeitsgrad mit einer vorbestimmten Schwelle (TH1, TH2) zu vergleichen (E4, E4');
- einen Speicher (130), der dafür geeignet und ausgelegt ist, die Schwingungssignatur zu speichern.

## Claims

1. A method (200) for monitoring the operation of a machine generating vibrations, including:
- a phase (F1) of learning the normal operation of the machine comprising the following steps:
-- (E1) acquiring in the temporal domain a first vibratory signal generated by the machine;
-- (E2) determining a first vibratory signature corresponding to the first vibratory signal;
-- (E3) determining a first level of similarity (SR1) between the first vibratory signature and each of the vibratory signatures saved in a knowledge base;
-- (E4) comparing the first level of similarity (SR1) with a predetermined first threshold (TH1);
-- (E5) if the first level of similarity (SR1) is lower than the first threshold (TH1), saving the vibratory signature in the knowledge base;
the steps (E1 to E5) of the learning phase being periodically repeated so as to constitute the knowledge base;
- a monitoring phase (F2) comprising the following steps:
-- (E1') acquiring in the temporal domain a second vibratory signal generated by the machine;
-- (E2') determining a second vibratory signature corresponding to the second vibratory signal;
-- (E3') determining a second level of similarity (SR2) between the second vibratory signature and each of the vibratory signatures saved in the knowledge base;
-- (E4') comparing the second level of similarity (SR2) with a predetermined second threshold (TH2);
-- (E7) if the second level of similarity (SR2) is lower than the second threshold (TH2), generating a warning, the second vibratory signature being considered as indicative of an anomaly;
the steps (E1' to E7) of the monitoring phase being periodically repeated;
the monitoring phase (200) progressing in a standalone manner from the learning phase (F1) to the monitoring phase (F2) when the knowledge base is considered as being constituted.

2. The method (200) according to claim 1, **characterised in that** the learning phase (F1) further includes a specific step (E6) of comparing the first level of similarity (SR1) of a predetermined number M of vibratory signatures determined consecutively with a predetermined specific threshold (TH0) higher than the first threshold (TH1), the knowledge base being considered as being constituted if the first level of similarity (SR1) of the last M vibratory signatures is higher than the specific threshold (TH0).

3. The method (200) according to any one of claims 1 and 2, **characterised in that** the monitoring phase (F2) includes a so-called "discovery" period during which the second vibratory signature considered as indicative of an anomaly is saved in the knowledge base.

4. The method (200) according to any one of claims 1 to 3, **characterised in that** the monitoring phase (F2) includes a step (E10) of comparing the duration of the anomaly with a predetermined duration, the anomaly being confirmed if the duration of the anomaly is longer than the predetermined duration.

5. The method (200) according to any one of claims 1 to 4, **characterised in that** the monitoring phase (F2) further includes a step (E8) of transmitting the warning.

6. The method (200) according to any one of claims 1 to 5, **characterised in that** the monitoring phase (F2) further includes a step of transmitting an analysis report performed periodically.

7. The method (200) according to any one of claims 1 to 6, **characterised in that** the steps (E1 to E5) of the learning phase (F1) are periodically repeated according to a first repetition period, the steps (E1' to E7) of the monitoring phase (F2) being periodically repeated according to a second repetition period longer than the first repetition period.

8. The method (200) according to any one of claims 1 to 7, **characterised in that** the vibratory signals are acquired by a vibration sensor, the method (200) further including an initial step (E0) of calibrating the vibration sensor.

9. The method (200) according to any one of claims 1 to 8, **characterised in that** that the second threshold (TH2) of the second comparison step (E4') is lower than the first threshold (TH1) of the first comparison step (E4).

10. A monitoring device (100) adapted and configured for the implementation of a method (200) according to any one of claims 1 to 9, the monitoring device (100) being intended to be installed on a machine generating vibrations, the device including:
- a vibration sensor (110) adapted and configured to acquire (E1, E1') a vibratory signal;
- a control module (120) adapted and configured to determine (E2, E2') a vibratory signature corresponding to the vibratory signal, to determine (E3, E3') a level of similarity between the vibratory signature and a knowledge base in which vibratory signatures are saved, and to compare (E4, E4') the level of similarity with a predetermined threshold (TH1, TH2);
- a memory (130) adapted and configured to save the vibratory signature.
